Europäisches Patentamt

European Patent Office

Office européen des brevets

(19)

(11) Veröffentlichungsnummer : **0 340 707 B1**

(12) **EUROPÄISCHE PATENTSCHRIFT**

(45) Veröffentlichungstag der Patentschrift :
**19.08.92 Patentblatt 92/34**

(21) Anmeldenummer : **89107882.6**

(22) Anmeldetag : **29.04.89**

(51) Int. Cl.$^5$ : **C04B 38/08**, C04B 14/06

(54) **Dämmstoff der Dichte 0,1 bis 0,4 g/cm3.**

(30) Priorität : **03.05.88 DE 3814968**

(43) Veröffentlichungstag der Anmeldung :
**08.11.89 Patentblatt 89/45**

(45) Bekanntmachung des Hinweises auf die
Patenterteilung :
**19.08.92 Patentblatt 92/34**

(84) Benannte Vertragsstaaten :
**AT BE CH DE FR GB IT LI NL SE**

(56) Entgegenhaltungen :
**EP-A- 0 027 633**
**DE-A- 1 759 696**
**FR-A- 952 723**
**US-A- 3 055 831**

(73) Patentinhaber : **BASF Aktiengesellschaft**
**Carl-Bosch-Strasse 38**
**W-6700 Ludwigshafen (DE)**

(72) Erfinder : **Wolff, Bernardo, Dr.**
**Rohrbacher Strasse 64**
**W-6900 Heidelberg (DE)**
Erfinder : **Seybold, Guenther, Dr.**
**Friedrich-Ebert-Strasse 14**
**W-6708 Neuhofen (DE)**
Erfinder : **Krueckau, Fritz Ernst**
**Waldstrasse 23**
**W-6719 Battenberg (DE)**

## Beschreibung

Die Erfindung betrifft neuartige Dämmstoffe beliebiger Formgebung mit hohem Wärmedämmvermögen, die keine organischen Treibmittel enthalten.

Konventionelle Dämmstoffe auf Basis von Polystyrol, Polyolefinen und Polyurethanen werden in der Regel unter Verwendung von organischen Treibmitteln, wie Fluorchlorkohlenwasserstoffen hergestellt. Das in den Zellen des Schaumstoffs eingeschlossene Treibmittel ist für das hohe Wärmedämmvermögen verantwortlich. Da derartige Treibmittel die Umwelt belasten, da sie langsam in die Atmosphäre entweichen, bestand die Aufgabe, Dämmstoffe mit hohen Wärmedämmvermögen zu entwickeln, die frei von organischen Treibmitteln sind.

Es ist bekannt, daß Silica-Aerogel ein hervorragendes Wärmedämmvermögen besitzt. Das Produkt ist jedoch nicht in beliebiger Formgebung herstellbar. Es zeigt ferner eine nur geringe Druckfestigkeit und ist bruchempfindlich. Darüber hinaus neigt eine lose Aerogel-Schüttung durch allmähliche Nachverdichtung zu einem gewissen Volumenschwund.

Daneben sind gemäß DE-A- 1 759 696 Dämmstoft-Formkörper bekannt, die aus mineralisden mikropovoser Parhikeler bestehen. Die Partikat sind mittels Bindemittel punktförmig miteinander verbünden.

Aufgabe der Erfindung war es somit insbesondere, ausgehend von Silica-Aerogel, Dämmstoffe beliebiger Formgebung herzustellen und dabei die geringe Druckfestigkeit und die hohe Bruchempfindlichkeit des Aerogels sowie den Volumenschwund einer Aerogel-Schüttung durch Einbinden dieses Stoffes in eine druckfestere Matrix auszugleichen, wobei die hohe Temperaturbeständigkeit erhalten und ein möglichst sicheres Brandverhalten erreicht werden sollte.

Diese Aufgaben wurden dadurch gelöst, daß man Silica-Aerogel in Partikelform und einem Durchmesser von 0,5 bis 5 mm mit einem Bindemittel beschichtet bzw. mischt und die Masse in Formen aushärtet.

Gegenstand der Erfindung ist somit ein Dämmstoff der Dichte 0,1 bis 0,4 g/cm³, bestehend aus mindest 50 Vol.-% Silica-Aerogel-Partikeln und einem Durchmesser zwischen 0,5 und 5 mm, die mittels eines organischen und/oder anorganischen Bindemittels miteinander verbunden sind.

Wesentlicher Bestandteil des neuen Dämmstoffs sind Silica-Aerogel-Partikel, die einen Durchmesser von 0,5 bis 5 mm, vorzugsweise 1 bis 4 mm aufweisen.

Die Silica-Aerogel-Perlen bestehen im wesentlichen aus amorphen $SiO_2$ und enthalten abhängig von der Art ihrer Herstellung noch Wasserspuren und gegebenenfalls geringe Mengen organischer Verbindungen (bis 10 %). Sie werden in bekannter Weise aus Wasserglaslösung über die Stufen Silica-Hydrogel, Lösungsmittelaustausch und anschließender überkritischer Trocknung hergestellt. Die Perlform kommt durch das Versprühen eines schnell gelierenden Kieselsäuresols aus einer speziell konstruierten Düse und Gelierung der Tropfen im Flug zustande. Nähere Einzelheiten dazu sind in DE 21 03 243 beschrieben. Austausch des Hydrogelwassers gegen andere gegen $SiO_2$ chemisch inerte Flüssigkeiten sind beispielsweise in US 2,093,454, US 3,977,993, JA 53 025 295 beschrieben, die überkritische Trocknung der Lyogele ist beispielsweise in US 2,093,454, US 2,249,767, FR 130 417, US 3,672,833, EP 00 18 955, US 4,327,065, EP 00 67 741, DE 34 29 671, EP 01 86 149, US 4,610,863 beschrieben. Vorteilhaft wird als Gelflüssigkeit zur überkritischen Trocknung trockenes Methanol verwendet, so daß die resultierenden Aerogele hydrophob mit einem organischen Kohlenstoffgehalt von etwa 5 % sind.

Die Silica-Aerogel-Partikel sind in der Regel perl- oder kugelförmig und haben eine Dichte zwischen 0,05 und 0,35 g/cm³ und eine Schüttdichte zwischen 0,04 und 0,25 g/cm³. Ihre Wärmeleitfähigkeit $\lambda$ liegt zwischen 0,02 und 0,025 [W/m.K].

Zur Herstellung der neuen Dämmstoffe werden die Silica-Aerogel-Partikel mittels eines Bindemittels miteinander verbunden. Die Verbindung der einzelnen Partikel miteinander kann dabei quasi punktförmig erfolgen. Vorteilhaft wird zusätzlich auch das Zwickelvolumen zwischen den einzelnen Partikeln ganz oder teilweise vom Bindemittel angefüllt. Das Bindemittel kann auch in Form eines Schaumes verwendet werden, so daß das Zwickelvolumen vom Bindemittelschaum ausgefüllt ist oder der Schaum die Matrix für die darin eingebetteten Aerogel-Partikel bildet.

Grundsätzlich sind alle bekannten Bindemittel, sei es auf anorganischer oder organischer Basis, für die Herstellung der neuen Dämmstoffe geeignet. Das Bindemittel wird vorteilhaft in flüssiger Form, d.h. als Flüssigkeit, Schmelze, als Lösung, Dispersion oder Suspension verwendet.

Geeignete anorganische Bindemittel sind beispielsweise Zement, Gips, Kalk und/oder Wasserglas.

Geeignete organische Bindemittel sind beispielsweise Reaktionsklebstoffe wie Epoxidharzklebstoffe, reaktive Polyurethanklebstoffe, Phenol-, Resorcin-, Harnstoff- und Melaminformaldehydharze, Silikonharzklebstoffe, Polyimid- und Polybenzimidazolharze, Schmelzklebstoffe wie Ethylenvinylacetat-Copolymere und Polyamide, wäßrige Dispersionsklebstoffe wie Styrol-Butadien und Styrol-Acrylester-Copolymerisate.

Das Bindemittel wird im allgemeinen in einer Menge von 5 bis 50 Vol.-% des Dämmstoffs verwendet, vorzugsweise in einer Menge von 5 bis 30. Die Auswahl des Bindemittels erfolgt je nach den gewünschten mechanischen und thermischen Eigenschaften des Dämmstoffs. Vorteilhaft verwendet man Bindemittel, die schwer entflammbar sind, wie Phenol-, Resorcin-, Harnstoffund Melaminformaldehydharze, Silikonharzklebstoffe, Polyimid- und Polybenzimidazolharze.

Für die Herstellung der neuen Dämmstoffe werden die Silica-Aerogel-Partikel mit dem Bindemittel zumindest oberflächlich beschichtet, beispielsweise durch Besprühen. Die beschichteten Partikel werden sodann in eine Form eingefüllt und in der Form ausgehärtet. Die Herstellung der Dämmstoffe kann auch durch Vermischen der Partikel mit dem Bindemittel in einer üblichen Mischvorrichtung und anschließende Formgebung des Gemisches erfolgen. Das Aushärten des Gemisches in der Form erfolgt je nach Art des Bindemittels durch Erwärmen und/oder Verdampfen des verwendeten Lösungs- und Dispersionsmittels, oder aber bei Verwendung von Schmelzklebern durch Abkühlen unter die Schmelztemperatur des Klebers.

Bei der Auswahl der Bindemittel wählt man zweckmäßig solche Produkte, die nicht in das Innere der porösen Silica-Aerogel-Partikel eindringen.

Die neuen Dämmstoffe sind für die Wärme- und Schalldämmung in allen Bereichen der Technik geeignet.

Beispiel 1 bis 3

Hydrophobierte Silica-Aerogel-Partikel mit einem mittleren Durchmesser von 3 mm und einer Schüttdichte von 0,14 g/cm³ wurden mit den in der Tabelle aufgeführten Mengen eines Melamin-Formaldehyd-Harzes, hergestellt aus 100 Teilen Kauramin-Leim 650 (reines Melamin-Formaldehyd-Kondensationsprodukt der BASF Aktiengesellschaft), 50 Teilen Wasser und 10 Teilen Ammoniumchlorid-Härter (Härter 70 der BASF Aktiengesellschaft) gleichmäßig beschichtet. Die Masse wurde in eine Form der Größe 20cm x 20cm x 2cm eingefüllt und bei der angegebenen Härtetemperatur gehärtet und getrocknet.

Tabelle

| Beispiel | Bindemittel | Gew.-% der Trockenmasse bezogen auf Silica-Aerogel | Härtetemperatur [°C] | Härtezeit [min] | Dämmstoffdichte [g/dm³] |
|---|---|---|---|---|---|
| 1 | | 129 | 125 | 10 | 363 |
| 2 | | 111 | 125 | 10 | 329 |
| 3 | | 108 | 125 | 15 | 317 |

| Beispiel | Gew.-% Silica-Aerogel in Dämmstoff | Gew.-% ausgehärtetes Bindemittel im Dämmstoff | Wärmeleitfähigkeit [W/m.K] | Druckfestigkeit [N/mm²] |
|---|---|---|---|---|
| 1 | 56 | 44 | 0,048 | 0,70 |
| 2 | 53 | 47 | 0,037 | 0,66 |
| 3 | 52 | 48 | 0,034 | 0,65 |

Beispiel 4

850 ml hydrophobierte Silica-Aerogel-Partikel mit einem mittleren Durchmesser von 3 mm und einer Schüttdichte von 140 g/Liter wurden mit 136 g einer wäßrigen Polymerdispersion auf Basis von thermoplastischen Styrolbutylacrylatcopolymeren mit einem Polymergehalt von 50 Gew.-% (Acronal 290 D der BASF Aktiengesellschaft) gleichmäßig vermischt. Diese Mischung wurde unter leichtem Druck in eine quaderförmige Glasform (23 x 23 x 2 cm³) mit einzelnen offenen Spalten gegeben, und im Mikrowellenherd bei Stufe 4 (Stufe 10 entsprechen 700 Watt Mikrowellenleistung) in Intervallen von 4 Minuten (zwischendurch Abkühlung auf ca. 50°C) insgesamt 44 Minuten erhitzt. Es wurde eine mit Polymer verklebte Platte aus Aerogelperlen erhalten, die folgende Daten aufwies:

| Gew.-% Silica-Aerogel im Dämm-stoff | Gew.-% ausge-härtetes Binde-mittel im Dämm-stoff | Dämmstoff-dichte (g/dm³) | Wärmeleitfähigkeit (W/m.K) bei Mittel-temperatur |
|---|---|---|---|
| 64 | 36 | 206 | 0.0282 bei 10°C<br>0.0288 bei 30°C<br>0.0307 bei 50°C |

Die Wärmeleitfähigkeiten wurden nach DIN 52616 gemessen.

Beispiel 5

850 ml hydrophobierte Silica-Aerogel-Partikel mit einem mittleren Durchmesser von 3 mm und einer Schüttdichte von 140 g/Liter wurden mit 200 g einer wäßrigen Silikonharzdispersion, 16 g Vernetzer und 10 g Katalysator (Methylsilikonharzdispersion CT 14 E mit 50 Gew.-% Silikonharz, Vernetzer V 15 und Katalysator C 38 der Fa. Wacker Chemie, München) innig vermischt. Die zusammenhängende Mischung wurde unter leichtem Druck in eine quaderförmige Glasform (23 x 23 x 2 cm³) mit einzelnen offenen Spalten gegeben, und im Mikrowellenherd bei einer Mikrowellenleistung von 700 W 10 Minuten lang erhitzt. Anschließend wurde die noch schwach klebrige Platte 2 Stunden bei 150°C getempert. Die erhaltene Platte aus Aerogelkugeln und Silikonharzpolymeren wies folgende Daten auf auf:

| Gew.-% Silica-Aerogel im Dämm-stoff | Gew.-% ausge-härtetes Binde-mittel im Dämm-stoff | Dämmstoff-dichte (g/dm³) | Wärmeleitfähigkeit (W/m.K) bei Mittel-temperatur |
|---|---|---|---|
| 49 | 51 | 300 | 0.0368 bei 10°C<br>0.0379 bei 30°C<br>0.0391 bei 50°C |

Die wärmeleitfähigkeiten wurden nach DIN 52616 gemessen.

Als Kleber wurde ein Pulver folgender Zusammensetzung verwendet. Lineare Oligomere mit einer mittleren Kettenlänge von 40 - 50 Monomereinheiten aus Benzophenon-2,3,8,9-tetracarbonsäurediarylamid-dimethylester, wobei die dem Amid zugrunde liegenden Amine 0.7 Moläquivalente 4,4′-Diaminodiphenylmethan und 0,3 Moläquivalente 2,6 Diaminopyridin, bezogen auf ein Moläquivalent Bezophenontetracarbonsäure, sind. Das verwendete Pulver dieser Oligomerzusammensetzung (Polyimid-Vorkondensat) enthält noch zu ca. 15 Gew.-% physikalisch gebundenes Methanol. Von diesem Pulver wurden 145 g mit 100 ml Wasser zu einem zähen Brei angerührt, und das überschüssige Wasser abdekantiert. In die verbleibende Klebemasse wurden 145 g hydrophobiertes Aerogelgranulat (Schüttdichte 140 g/Liter, org. C-Gehalt 6 Gew.-% und mittlere Korngröße 3 mm) in insgesamt 9 Portionen vorsichtig so eingemischt, daß eine plastisch verformbare, zusammenhängende Masse aus Kügelchen und Kleber enstand.

Diese Masse wurde mit sanftem Druck in eine quadratische Hohlform mit den Innenabmessungen 20 x 20 x 2 cm³ gefüllt, wobei die Oberfläche der Kleber-Aerogelmasse mit temperaturfesten Papier abgedeckt wurden. Die Form wurde anschließend bei einem Unterdruck von 200 mbar einer Temperaturbehandlung unterworfen, wobei die Temperatur von Raumtemperatur um jeweils 20°C bis 150°C erhöht wurde. Die einzelnen Temperaturen wurden jeweils 10 Minuten gehalten; als 150°C erreicht waren, wurde noch eine Stunde nachgetempert.

Es wurde eine spröde, gelb-orange gefärbte Platte erhalten.

EP 0 340 707 B1

| Gew.-% Silica-Aerogel im Dämmstoff | Gew.-% ausgehärtetes Bindemittel (Polyimid) im Dämmstoff | Dämmstoffdichte (g/dm³) | Wärmeleitfähigkeit (W/m.K) bei Mitteltemperatur |
|---|---|---|---|
| 54 | 46 | 354 | 0.0398 bei 10°C<br>0.0413 bei 30°C<br>0.0429 bei 50°C |

Die Wärmeleitfähigkeiten wurden nach DIN 52616 gemessen.

## Patentansprüche

1. Dämmstoff der Dichte 0,1 bis 0,4 g/cm³ bestehend aus mindestens 50 Vol.-% Silica-Aerogel-Partikeln mit einem Durchmesser zwischen 0,5 und 5 mm, die mittels mindestens eines organischen und oder anorganischen Bindemittels miteinander verbunden sind.

2. Dämmstoff nach Anspruch 1, dadurch gekennzeichnet, daß die Silica-Aerogel-Partikel hydrophob sind.

3. Dämmstoff nach Anspruch 1 bis 2, dadurch gekennzeichnet, daß das anorganische Bindemittel aus Zement, Kalk, Gips und/oder Wasserglas besteht.

4. Dämmstoff nach Anspruch 1 bis 2, dadurch gekennzeichnet, daß organische Bindemittel verwendet werden.

5. Verfahren zur Herstellung eines Dämmstoffs gemäß Anspruch 1 bis 4, dadurch gekennzeichnet, daß man Silica-Aerogel-Partikel mit dem Bindemittel beschichtet und/oder vermischt und die Masse in einer Form aushärtet.

## Claims

1. An insulating material having a density of from 0,1 to 0,4 g/cm³ and comprising at least 50% by volume of silica aerogel particles which have a diameter of from 0,5 to 5 mm and are bonded to one another by means of at least one organic and/or inorganic binder,

2. An insulating material as claimed in claim 1, wherein the silica aerogel particles are hydrophobic,

3. An insulating material as claimed in claim 1 or 2, wherein the inorganic binder comprises cement, lime, gypsum and/or water glass,

4. An insulating material as claimed in claim 1 or 2, wherein an organic binder is used,

5. A process for the production of an insulating material as claimed in any of claims 1 to 4, wherein silica aerogel particles are coated and/or mixed with the binder, and the composition is cured in a mold.

## Revendications

1. Matériau isolant d'une masse spécifique de 0,1 à 0,4 g/cm³, qui se compose d'au moins 50% en volume de particules d'aérogel de silice, d'un diamètre qui fluctue de 0,5 à 5 mm, qui sont liées les unes aux autres à l'aide d'au moins un liant organique et/ou inorganique.

2. Matériau isolant suivant la revendication 1, caractérisé en ce que les particules d'aérogel de silice sont hydrophobes.

3. Matériau isolant suivant l'une quelconque des revendications 1 et 2, caractérisé en ce que le liant inorganique est constitué de ciment, de chaux, de plâtre et/ou de verre soluble ou silicate de potassium.

4. Matériau isolant suivant l'une quelconque des revendications 1 et 2, caractérisé en ce que l'on utilise des liants organiques.

5. Procédé de fabrication d'un matériau isolant suivant l'une quelconque des revendications 1 à 4, caractérisé en ce que l'on revêt et/ou mélange les particules d'aérogel de silice avec le liant et on laisse durcir la masse dans un moule.